# EUROPEAN PATENT APPLICATION

(11) **EP 1 491 909 A2**
(43) Date of publication of application: **29.12.2004**
(21) Application number: 04253802.5
(22) Date of filing: 25.06.2004
(51) Int. Cl.: G01S 1/00

(54) **GPS receiver**

(30) Priority: 27.06.2003 JP 2003184824
(71) Applicant: SEIKO EPSON CORPORATION, Tokyo 160-0811 (JP)
(72) Inventor: Aisawa, Susumu Seiko Epson Corporation, Suwa-shi Nagano-ken 392-8502 (JP)
(74) Representative: Sturt, Clifford Mark

(57) **Abstract**

The invention seeks to provide a GPS receiver which can enhance its positioning accuracy even in a case where a positioning computation is executed by receiving radio waves from GPS satellites at a spot of weak electric field strengths, such as in a room. Signal processing units 13a - 13n demodulate received signals from GPS satellites a, b, and n in accordance with output signals from a radio-frequency reception unit 12, respectively, thereby to obtain positioning-computational data from the GPS satellites a, b, ···· and n as contained in the received signals. A data processing unit 14 selects a predetermined number of data from among the positioning-computational data Da, Db, and Dn from the signal processing units 13a - 13n, and it successively transfers the positioning-computational data to a positioning computation unit 15 with the selected data as one set. The positioning computation unit 15 successively executes positioning computations by using the respective sets of positioning-computational data transferred from the data processing unit 14, and it transfers the results of the positioning computations to the data processing unit 14. The data processing unit 14 evaluates the average of the data of the results of the positioning computations so as to obtain the average value as the final current position data.

## Description

The present invention relates to a GPS receiver which receives radio waves from a plurality of GPS (Global Positioning System) satellites by an antenna so as to find a current position, and more particularly to one which can find a current position by receiving the radio waves at a spot of weak electric fields, such as an indoor spot.

Conventional GPS receivers are premised on being used outdoors, and their reception sensitivities are designed so as to satisfy outdoor service conditions.

On the other hand, in recent years, there has appeared a GPS receiver of high sensitivity as exhibits a reception sensitivity being about 20 db higher as compared with those of the conventional GPS receivers and as is usable even indoors.

However, whereas the high-sensitivity GPS receiver has the merit of being usable indoors, it undergoes the drawback that a positioning accuracy lowers.

More specifically, the GPS receiver computes the respective distances between this GPS receiver itself and three or more GPS satellites by receiving radio waves from the individual GPS satellites and employing the arrival time periods thereof, and it computes a current position from the computed results of the distances.

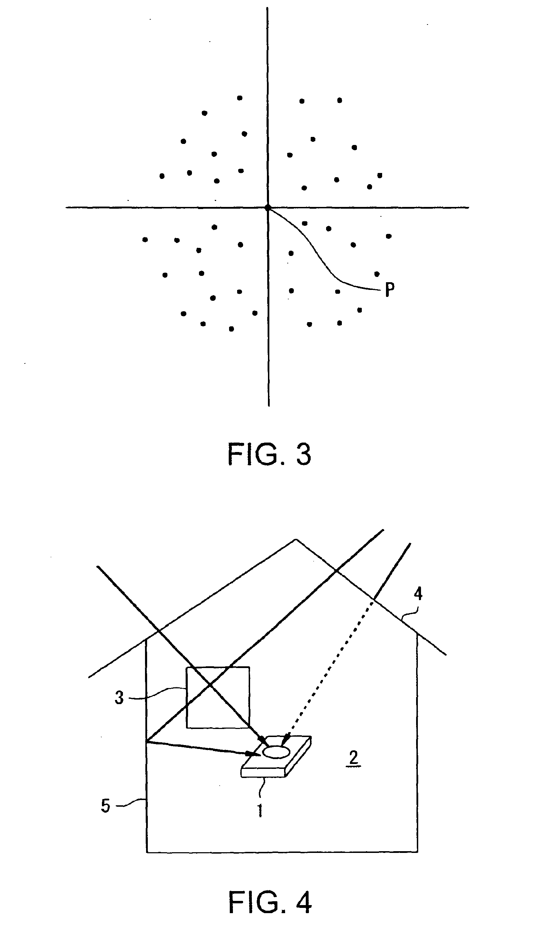

In this regard, as shown in Fig. 4, in a case where the high-sensitivity GPS receiver 1 is used in a room 2, radio waves which the antenna of the GPS receiver 1 receives consist mostly of one which enters from a window 3 after having been reflected from the walls of buildings, one which has been transmitted through a roof 4 and reflected from the wall 5 or the like in the room, and so forth. That is, the received radio waves of the antenna become those reflected waves other than direct waves which have been influenced by multiple paths.

When influenced by the multiple paths in this manner, the radio waves from the GPS satellites arrive at the antenna of the GPS receiver after having been reflected from the buildings, etc. once. Therefore, the GPS receiver erroneously measures the distances between this GPS receiver itself and the GPS satellites. This leads to the drawback that also a positioning result becomes a value having an error.

In this manner, in a case where the GPS receiver is used at an indoor spot or the like spot of weak field strengths, it is very difficult to escape from such a drawback, and a positioning accuracy lowers, so that the solution of the drawback has been desired.

Accordingly, an object of the present invention is to provide a GPS receiver which can enhance its positioning accuracy even in a case where a positioning computation is executed by receiving radio waves from GPS satellites at a spot of weak field strengths, such as in a room.

In order to solve the problem and to accomplish the object of the present invention, individual aspects of the invention have been constructed as stated below.

The first aspect of the invention consists in a GPS receiver wherein a current position can be found in such a way that radio waves from a plurality of GPS satellites are received by an antenna, comprising data modulation means for obtaining positioning-computational data of the individual GPS satellites on the basis of received signals from the plurality of GPS satellites, respectively; positioning computation means for executing positioning computations each of which uses data of a predetermined combination among the plurality of positioning-computational data obtained by said data demodulation means; and averaging means for averaging results of the positioning computations as obtained by said positioning computation means, and affording a result of the averaging as a final current position.

The second aspect of the invention consists in the GPS receiver of the first aspect, wherein said data demodulation means, said positioning computation means and said averaging means execute a series of operations thereof a plurality of times within a predetermined time period.

The third aspect of the invention consists in the GPS receiver of the first aspect or the second aspect, wherein the antenna consists of a plurality of antennas, and the plurality of antennas are installed so as to differ in main lobe directions of their directivities from each other/one another.

The fourth aspect of the invention consists in the GPS receiver of the first aspect or the second aspect, wherein measurement instruction means is further comprised for allowing a user to give an instruction of a high-accuracy measurement of a current position, subject to the user's use of said GPS receiver in a stationary state; and said data demodulation means, said positioning computation means and said averaging means execute a series of operations in a case where the measurement instruction has been given through said measurement instruction means.

The fifth aspect of the invention consists in the GPS receiver of the first aspect or the second aspect, wherein received-signal level detection means is further comprised for detecting levels of the received signals from the plurality of GPS satellites; and said data demodulation means, said positioning computation means and said averaging means execute a series of operations in a case where the received-signal levels detected by said received-signal level detection means are below a predetermined value.

The sixth aspect of the invention consists in the GPS receiver of the first aspect or the second aspect, wherein a sensor is further comprised for detecting whether or not said GPS receiver is stationary; and said data demodulation means, said positioning computation means and said averaging means execute a series of operations in a case where said sensor has detected the stationariness of said GPS receiver.

According to the GPS receiver of the present invention thus constructed, the positioning accuracy thereof can be enhanced even in a case where the positioning computation is executed by receiving the radio waves from the GPS satellites at a spot of weak field strengths, such as in a room.

Embodiments of the present invention will now be described by way of further example only and with reference to the drawings, in which:-
Fig. 1 is a block diagram showing the construction of an embodiment of the present invention,
Fig. 2 is a flow chart for explaining an operating example of the embodiment,
Fig. 3 is a diagram showing an example of an experimental result on which the embodiment is premised, and
Fig. 4 is an explanatory view for explaining multiple paths.

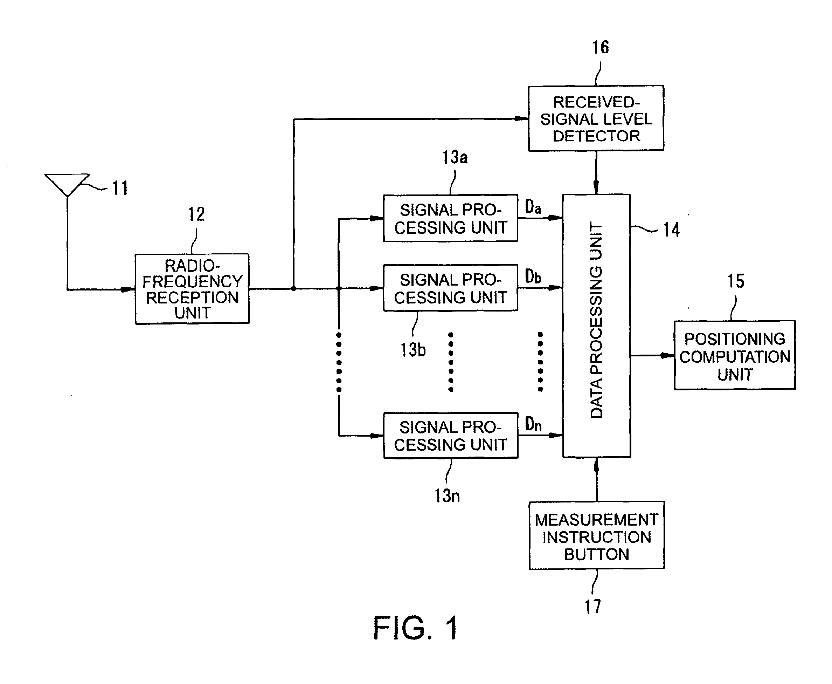

Fig. 1 shows the construction of a GPS receiver embodying the present invention. This embodiment is grounded on an experimental result as stated below, which will therefore be explained.

In case of using a GPS receiver outdoors, the error of a positioning accuracy is within 10 m. In contrast, in case of using the GPS receiver indoors, a positioning error is about 100 m.

However, in a case where positioning is repeated indoors over, for example, one hour and where the individual positioning results are put together, they become as shown in Fig. 3 by way of example. According to Fig. 3, the individual positioning results disperse within a circle about an essential position (true position) P. In the experiment, positioning computations were executed in such a way that a radio wave from a different GPS satellite was received each time a positioning computation was iterated.

From the positioning results, the inventor has found out that, even in positioning at an indoor spot or the like spot of weak radio waves, positioning of higher accuracy is possible by using a received signal from a different GPS satellite every positioning computation, or by averaging positioning results in a temporal direction.

The GPS receiver according to the embodiment of the present invention has been made on the basis of the finding as stated above, and it is permitted to enhance its positioning accuracy even in the positioning at the indoor spot or the like spot of weak radio waves.

For this purpose, as shown in Fig. 1, the GPS receiver according to the embodiment includes a receiving antenna 11, a radio-frequency reception unit 12, n signal processing units 13a, 13b, ^{....} and 13n, a data processing unit 14, a positioning computation unit 15, a received-signal level detector 16, and a measurement instruction button 17.

The receiving antenna 11 is an antenna which receives radio waves from a plurality of GPS satellites, and which outputs signals corresponding to the receptions. The outputs of the receiving antenna 11 are inputted to the radio-frequency reception unit 12.

The radio-frequency reception unit 12 amplifies, tunes and detects the electric signals which are outputted in accordance with the radio waves received by the receiving antenna 11, and it extracts desired received signals so as to supply the extracted received signals to the signal processing units 13a - 13n, respectively.

The signal processing units 13a - 13n demodulate the received signals from n (for example, eight) GPS satellites a, b, ···· and n, not shown, in accordance with the output signals from the radio-frequency reception unit 12, respectively, thereby to obtain positioning-computational data from the individual GPS satellites a, b, ···· and n as are contained in the corresponding received signals and as are necessary for positioning-computations. The positioning-computational data obtained are temporarily stored in the data processing unit 14.

As will be explained later, the data processing unit 14 selects a predetermined number (for example, three) of data from among the positioning-computational data Da, Db, "" and Dn from the respective GPS satellites a, b, ···· and n as obtained by the corresponding signal processing units 13a - 13n, and it successively transfers the data to the positioning computation unit 15 with the selected data as one set (one unit).

The positioning computation unit 15 successively executes the positioning computations by using the positioning-computational data of the respective sets transferred from the data processing unit 14, and it transfers the results of the positioning computations to the data processing unit 14.

Besides, the data processing unit 14 evaluates the average of the data of the results of the positioning computations from the positioning computation unit 15, thereby to obtain the average value as the final current position data.

The received-signal level detector 16 is a detector which detects the levels of the received signals from the GPS satellites a, b, ···· and n on the basis of, for example, the output signals of the radio-frequency reception unit 12, so as to supply the detected levels to the data processing unit 14.

The measurement instruction button 17 is a button through which a user instructs the GPS receiver to measure a current position at a high accuracy, on condition that the user uses the GPS receiver in a stationary state. Measurement instruction data based on the measurement instruction is supplied to the data processing unit 14.

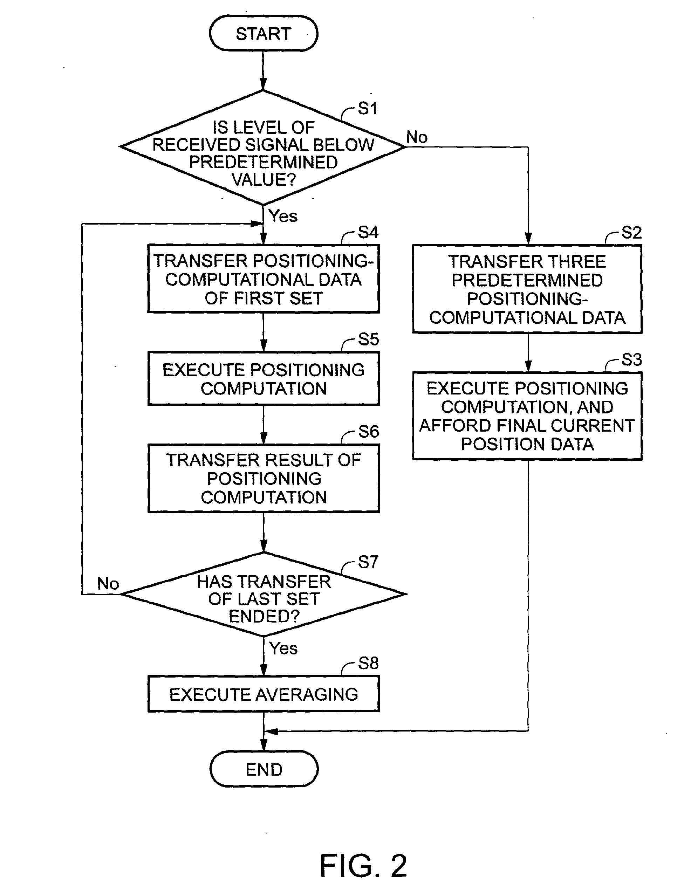

Next, the first operating example of the embodiment thus constructed will be described with reference to Figs. 1 and 2.

Now, upon the closure of a power source, the radio-frequency reception unit 12 amplifies, tunes and detects electric signals which are outputted in accordance with radio waves received by the receiving antenna 11, and it extracts the desired ones of the received signals. The extracted received signals are respectively supplied to the signal processing units 13a - 13n.

The signal processing units 13a - 13n demodulate the received signals from the GPS satellites a, b, ···· and n in accordance with the output signals from the radio-frequency reception unit 12, respectively, thereby to obtain the positioning-computational data Da, Db, ^{....} and Dn from the individual GPS satellites a, b, ^{....} and n as are contained in the corresponding received signals and as are necessary for the positioning computations.

Here, assuming by way of example that the five positioning-computational data Da, Db, Dc, Dd and De have been obtained in accordance with the received signals from the GPS satellites a, b, c, d and e, they are once stored in the data processing unit 14.

Next, the operations of the data processing unit 14 and positioning computation unit 15 will be described with reference to Fig. 2.

The data processing unit 14 decides whether or not each of the levels of the received signals from the GPS satellites a, b, ···· and n as detected by the received-signal level detector 16 is below a predetermined level (step S1).

In a case where, as the result of the decision, the received-signal level is, at least, the predetermined value, the routine proceeds to a step S2, and in a case where the level is below the predetermined value, the routine proceeds to a step S4.

At the step S2, the data processing unit 14 transfers the three predetermined data of the five positioning-computational data Da, Db, Dc, Dd and De to the positioning computation unit 15. At a step S3, the positioning computation unit 15 executes the positioning computation by using the three transferred positioning-computational data, and it affords the computed result as the final current position data.

Assuming here that the three data, for example, be selected as the positioning-computational data necessary for the positioning computation, from among the five positioning-computational data Da, Db, Dc, Dd and De stored in the data processing unit 14 as stated above, there are 10 ways of selections. That is, when the three positioning-computational data necessary for the positioning computation are combined as one set, there are 10 sets of combinations, and the combinations are known beforehand.

Accordingly, the data processing unit 14 transfers the positioning-computational data of the first set to the positioning computation unit 15 (step S4). The positioning computation unit 15 executes the positioning computation by using the transferred set of positioning-computational data (step S5), and it transfers the data of the computed result to the data processing unit 14 (step S6).

At the next step S7, the data processing unit 14 decides whether or not the transfer of the positioning-computational data of the last set (in this example, the 10th set) has ended. In a case where, as the result of the decision, the transfer of the last set of positioning-computational data has not ended, the processing of the steps S4 - S6 is iterated. In due course, when the transfer of the last set of positioning-computational data has ended, the routine proceeds to a step S8.

At the step S8, the data processing unit 14 obtains the average of the data of the positioning-computational results of the respective sets as supplied from the positioning computation unit 15, and it affords the obtained average value as the final current position data.

Next, the second operating example of the embodiment of the present invention will be described.

The second operating example corresponds to the case where, on condition that the user uses the GPS receiver in a stationary state, he/she presses the measurement instruction button 17 to give the data processing unit 14 the instruction of the high-accuracy measurement of a current position.

In this case, the data processing unit 14 invalidates the received-signal level detected by the received-signal level detector 16. Besides, the data processing unit 14 and the positioning computation unit 15 execute the series of processing of the steps S4 - S8 shown in Fig. 2, in association so as to obtain the final current position data.

In the first or second operating example described above, in the case where the received-signal level detected by the received-signal level detector 16 is below the predetermined value, or where the measurement instruction button 17 has been pressed, the final current position data is obtained by the series of processing of the steps S4 - S8 shown in Fig. 2.

Such an operation, however, may well be replaced with an operation in which, when the above situation is met, the series of processing consisting of the steps S4 - S8 shown in Fig. 2 is successively or intermittently carried out a plurality of times (for example, twice - 10 times or so) within a predetermined time period (for example, one hour), the average of current position data obtained by the plurality of times of processing is evaluated, and the evaluated average is afforded as the final current position data.

On this occasion, each time the series of processing has ended, the data processing unit 14 acquires the positioning-computational data Da, Db, ···· and Dn from the respective signal-processing units 13a - 13n anew. Besides, the series of processing is executed on the basis of the positioning-computational data Da, Db, ···· and Dn acquired anew.

Next, the first modification and second modification of the embodiment of the present invention will be described below.

### (First Modification)

The foregoing embodiment includes only one receiving antenna 11 as shown in Fig. 1.

The first modification includes a plurality of (for example, two or three) receiving antennas instead of the receiving antenna 11 in Fig. 1. The individual receiving antennas are arranged so that the directions of the main lobes of their directivities may differ from one another. In addition, the outputs of the plurality of receiving antennas are selectively supplied to the radio-frequency reception unit 12.

Thus, each of the receiving antennas can receive the radio waves from the GPS satellites, so that positioning-computational data larger in number than in the case of the single receiving antenna can be acquired. Therefore, the number of the combinations of the positioning-computational data becomes larger than in the case of the single receiving antenna, so that a positioning accuracy can be enhanced.

### (Second Modification)

The second modification consists in that a sensor (for example, acceleration sensor) which detects whether or not the GPS receiver is in a stationary state is added to the embodiment in Fig. 1. Besides, in a case where the sensor has detected that the GPS receiver is in the stationary state, the series of processing consisting of the steps S4 - S8 shown in Fig. 2 is carried out once, or a plurality of times within a predetermined time period.

Thus, the positioning computation processing can be executed under the stationary state of the GPS receiver, so that the second modification can contribute to the enhancement of the positioning accuracy of the GPS receiver.

As described above, according to the GPS receiver of the present invention, the positioning accuracy thereof can be enhanced even in a case where a positioning computation is executed by receiving radio waves from GPS satellites at a spot of weak electric field strengths, such as in a room.

## Claims

1. A GPS receiver wherein a current position can be found in such a way that radio waves from a plurality of GPS satellites are received by an antenna, **characterized by** comprising:
data modulation means for obtaining positioning-computational data of the individual GPS satellites on the basis of received signals from the plurality of GPS satellites, respectively;
positioning computation means for executing positioning computations each of which uses data of a predetermined combination among the plurality of positioning-computational data obtained by said data demodulation means; and
averaging means for averaging results of the positioning computations as obtained by said positioning computation means, and affording a result of the averaging as a final current position.

2. A GPS receiver as defined in claim 1, **characterized in that** said data demodulation means, said positioning computation means and said averaging means execute a series of operations thereof a plurality of times within a predetermined time period.

3. A GPS receiver as defined in claim 1 or claim 2,
**characterized in that** the antenna consists of a plurality of antennas, and that the plurality of antennas are installed so as to differ in main lobe directions of their directivities from each other/one another.

4. A GPS receiver as defined in claim 1 or claim 2, **characterized in:**
**that** measurement instruction means is further comprised for allowing a user to give an instruction of a high-accuracy measurement of a current position, subject to the user's use of said GPS receiver in a stationary state; and
**that** said data demodulation means, said positioning computation means and said averaging means execute a series of operations in a case where the measurement instruction has been given through said measurement instruction means.

5. A GPS receiver as defined in claim 1 or claim 2, **characterized in:**
**that** received-signal level detection means is further comprised for detecting levels of the received signals from the plurality of GPS satellites; and
**that** said data demodulation means, said positioning computation means and said averaging means execute a series of operations in a case where the received-signal levels detected by said received-signal level detection means are below a predetermined value.

6. A GPS receiver as defined in claim 1 or claim 2, **characterized in:**
**that** a sensor is further comprised for detecting whether or not said GPS receiver is stationary; and
**that** said data demodulation means, said positioning computation means and said averaging means execute a series of operations in a case where said sensor has detected the stationariness of said GPS receiver.
